Europäisches Patentamt

European Patent Office

Office européen des brevets

(19)

(11) Publication number: **0 058 059**
**B1**

(12)                        EUROPEAN PATENT SPECIFICATION

(45) Date of publication of patent specification: **14.05.86**

(21) Application number: **82300569.9**

(22) Date of filing: **04.02.82**

(51) Int. Cl.⁴: **G 11 B 15/18,** G 11 B 15/20, H 04 N 5/782

(54) **Video tape recording and reproducing apparatus.**

(30) Priority: **04.02.81 JP 16166/81**

(43) Date of publication of application:
**18.08.82 Bulletin 82/33**

(45) Publication of the grant of the patent:
**14.05.86 Bulletin 86/20**

(84) Designated Contracting States:
**DE FR GB**

(56) References cited:
**DE-A-2 800 499**
**DE-A-3 006 735**
**US-A-4 163 263**

(73) Proprietor: **Matsushita Electric Industrial Co.,
Ltd.**
**1006, Oaza Kadoma**
**Kadoma-shi Osaka-fu, 571 (JP)**

(72) Inventor: **Mino, Mineo**
**17-10, 1-chome**
**Nasuzukuri Hirakata-shi Osaka-fu (JP)**
Inventor: **Yamanishi, Kazuhiro**
**3-106, Arakawa**
**Higashiosaka-shi Osaka-fu (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to a video tape recording and reproducing apparatus using rotary magnetic heads, and more particularly to such apparatus which prevents a magnetic tape and the rotary heads from being damaged when temporarily stopped for a long time during the recording or reproducing modes and is easy to use for users of VTR.

It is already known from DE—A—3,006,735 to stop transportation of the tape in a temporary stop mode while keeping the magnetic heads rotating and in contact with the tape.

When video tape is temporarily stopped during the recording or reproducing modes, the stop, if for a long time, leads to the rotary magnetic heads scanning the same portion of the magnetic tape, thereby creating the problem that the magnetic layer of the tape peels off leading to the tape damage or adhesion of the peeled layer to the magnetic heads. Therefore, conventionally, the temporary stop, after the lapse of a given time, is often released to put the VTR into a stop mode condition. Such a remedy, however, requires reloading of the magnetic tape on the rotary magnetic head drum for restarting the recording or reproducing, or the head shifts from the position where it has previously recorded or reproduced the tape.

An object of the invention is to provide a video tape recording and reproducing apparatus which has improved means for the control for a temporary stop of magnetic tape during the recording or reproducing mode.

The present invention provides a video signal recording and reproducing apparatus for a video tape recorder which loads a magnetic tape (2) on a rotary magnetic head drum (3) so as to record or reproduce video signals by magnetic heads (21, 22) said apparatus including a tape transportation means (12, 13, 14, 15, 18, 29) which during recording or reproducing, temporarily stops transportation of said tape while keeping the rotary magnetic heads rotating and said tape in contact with said drum characterised in that the tape transportation means includes means (26) which allows said tape (2) to advance repetitively a little after each lapse of a time T from a position of the temporary stop, thereby to prevent the magnetic heads (21, 22) and the tape (2) from being damaged.

Features and advantages of the invention will be more apparent from the following description of an embodiment thereof when taken in conjunction with the accompanying drawings, in which:—

Figure 1 is a diagrammatic plan view of mechanism of a video signal recording and reproducing apparatus according to this invention using a rotary head drum;

Figure 2 is a flow chart of the program of a microcomputer used in the apparatus shown in Figure 1; and

Figure 3 is a perspective view of a video signal recording and reproducing apparatus of the invention, in combination with a television camera.

In a so-called helical scan video tape recorder, a magnetic tape is wound on a rotary head drum and is recorded, while travelling, by rotary magnetic heads to produce sloping tracks in the tape, the reproduction being performed by scanning the recording tracks with the magnetic heads.

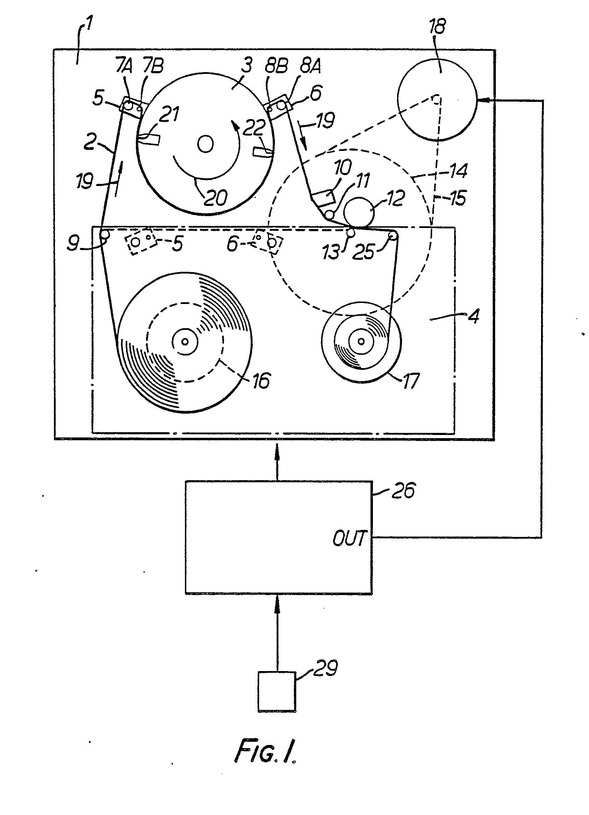

Figure 1 is a plan view of such a mechanism in which a mechanical chassis 1 has disposed thereon a rotary head drum 3 and tape cassette 4 containing tape reels 16, 17. Figure 1 shows a recording or reproducing condition, in which a magnetic tape 2 is drawn out of the cassette 4 and loaded on the rotary head drum 3 through loading supports 5 and 6 having guide posts 7A, 7B, 8A and 8B respectively (loading supports 5 and 6 move from within the cassette as shown in dotted lines to the position shown in full lines). The magnetic tape 2 is drawn off the supplying reel 16 and is wound on the take-up reel 17 via a guide post 9, the guide posts 7A and 7B, the rotary head drum 3, the guide posts 8B and 8A, an audio and control signal recording and reproducing head 10, a guide post 11, a capstan 13, a pinch roller 12, and a guide post 25.

Next, the tape transportation means will be described on a basis of Figure 1. A driving force is transmitted from a motor 18 to a capstan flywheel 14 (provided below chassis 1) through a belt 15, so that the capstan 13 which is integral with the flywheel 14 rotates to move magnetic tape 2 in the direction of the arrow 19 when the pinch roller 12 presses the tape against the capstan 13 at the finish of the tape loading operation. In addition, the magnetic tape is allowed to be wound on the take-up reel 17.

In some cases, the magnetic tape is temporarily stopped to be left as it is until the sequential recording starts. This happens, for example, during recording using a television camera, when selecting an object to be photographed or for a pause during recording. When this happens, the travel of the magnetic tape is temporarily brought to a halt although the VTR mode is still in the recording condition. Similarly, a temporary stop may occur during reproduction.

It is enough for the temporary stop of the magnetic tape to stop the rotation of motor 18 but there is a difference between the recording and the reproducing. Simply stopping rotation of the motor 18 is enough during the recording, while during reproduction, a particular design is necessary not to cause fluctuation on a picture at the boundary of the recordings prior to and after the temporary stop of the magnetic tape, which will be detailed below. In either case, the travel of magnetic tape inevitably stops and the magnetic tape 2 is scanned and rubbed at the same portion by the rotary magnetic heads 21 and 22 on the rotary magnetic head drum 3.

The magnetic tape for VTR, even when rubbed several times on the same portion by the rotary magnetic heads, may not be damaged if rubbed for only a short time. The usual magnetic tape, however, may cause head clogging due to peeling-off of the magnetic layer and its adhesion to the magnetic heads. Hence, in order not to affect the magnetic tape or the magnetic heads a halt to the recording or reproducing modes has been often carried out hitherto after a lapse of time of, say, five minutes from the temporary stop.

A halt in VTR means that the magnetic tape loaded on the rotary head drum is rewound into the cassette. When it is intended to restart the recording or reproducing mode from the above halt condition, a command button is pushed for recording or reproducing, but the rotary head system VTR, as well-known, must take the tape out of the cassette to be loaded on the rotary head drum. In other words, it is necessary, for the recording, reproducing and halt, to load the magnetic tape on the rotary head from the cassette: the so-called loading, and to take the loaded tape into the cassette: the so-called unloading.

When restarting the recording or reproducing after temporary stop of the tape and the halt of VTR, the above loading and unloading operations shift the magnetic tape when reloaded, from its position with respect to the rotary head drum at the temporary stop. Recording in such conditions will create fluctuations at the boundary of recorded pictures, thereby not obtaining a reproduced picture which is the same as that at the temporary stop.

This invention aims at provision of a VTR free from the above defect, which is so constructed that the magnetic tape, when left as temporarily stopped, is moved forward a little, regardless of its temporary stop mode, after a lapse of time e.g. five minutes to thereby put the tape again in the temporary stop condition. Such operation is carried out by a circuit for control of the unit described above. The mechanical control circuit 26 is altered and composed mainly of a microcomputer, so that the constant time interval T (for example about five minutes) from the temporary stop is measured by the microcomputer (a timer means) and a command of moving the tape forward a little by said tape transportation means is output by the same.

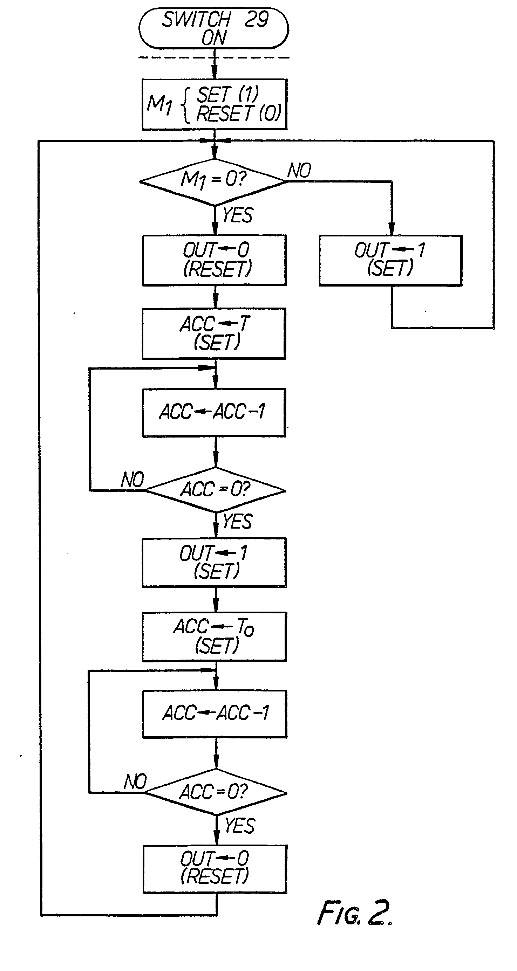

To describe this invention in full, the operation of a microcomputer (MPU) 26 will be described in conjunction with a flow chart of the program for the microcomputer which is shown in Figure 2.

A switch 29 provides the command signal for the temporary stop (PAUSE) and restarts the tape travel. A terminal "out" in the MPU 26 is the output for the control signal which starts or stops motor 18. Whenever the MPU 26 is given said control signal from switch 29, an output phase of one memory $M_1$ (usually a flip-flop) in the MPU 26 is inverted. The output phase is kept unchanged unless said control signal is given. In the set state ("1") of $M_1$, the magnetic tape travels, and in the reset state ("0") of $M_1$, the magnetic tape does not travel, namely pause. "$M_1=0$?" in the flow chart of Figure 2 means the judgement where $M_1=0$ (PAUSE) or $M_1=1$ (travel). If $M_1=1$, "OUT" in the MPU 26 is set "1", so that motor 18 revolves. On the other hand, if $M_1=0$ (PAUSE) "OUT" in the MPU 26 is reset "0" so that motor 18 stops. In this way, "OUT 0" process in the flow chart in Figure 2 is carried out.

Next, to obtain the time interval T, "ACC" (=counter) is set the value T. Then, the ACC is decremented (substract 1), and tested if the value of ACC is 0. If the value of ACC is not 0, the ACC is decremented and tested again. This operation is repeated until the value of ACC becomes 0, i.e. the time interval T ends.

After the time interval T, "OUT" of the MPU 26 is set "1" (OUT 1) so that the tape begins travelling. "OUT" is in set state during a time $T_0$ ($T_0$ is counted in the same way as $T_1$). After the time $T_0$ passed, "OUT" is reset "0". The time $T_0$ is a very short time. For example, $T_0$ may be at least a time corresponding to one field of the television signal. After this process (OUT 0), the operation returns to the starting point where the next operation is determined by the state of $M_1$. That is, if $M_1=0$, the tape will stop, and if $M_1=1$, the tape will travel.

Further, during the PAUSE state, if the start command is given, i.e. $M_1$ becomes 1, an interruption routine (not shown) will start prior to the above routine shown in Figure 2, so that the ACC will be reset and "OUT" becomes 1 thereby to move the tape forward.

The slightly forward movement of the tape is advantageous in that the portion of the tape rubbed for said time interval T by the rotary magnetic head is shifted slightly due to the movement of the tape, whereby the tape can be put again in the temporary stop condition. The distance l for the shift is dependent on the tape speed u cm/sec during the minimum normal reproducing or recording, divided by the field frequency $f_F$:

$$l=u/f_F \qquad (1)$$

where $f_F$ is 59.94 Hz for the Japan-U.S.A. standard television signal. For example, a tape speed of u=3.335 cm/sec for the VHS Standard gives l=0.556 mm. A user is deemed not to be sensible of the shift of the tape during the temporary stop because the reproduced picture does not fluctuate by virtue of such a small shift except a considerably violent motion is recorded. The tape, if left for a long time, travels little by little every five minutes, so that the reproduced picture of course is different from the original.

Next, the recording operation will be detailed. By using temporary stop facility during the recording it is desirable that the transition to the next recording will be smooth. A helical scan VTR, as is well-known, records video signals representing one field on one slope of the track, so that the scanning trace of rotary head on the tape at the temporary stop is different from that during the transportation of the tape. Hence, when the tape merely is stopped and the recording restarts, fluctuation in the picture is generated due to the transition. There are various methods to avoid the above, among which the following method is often adopted. Namely, the magnetic tape is reversely moved by $I_R$ (several centimeters) from the temporary stop point and then stopped. In brief, the recorded tape is moved backward only by $I_R$ and then temporarily stopped. Upon restarting the recording, the tape is normally moved, in the reproducing condition, at a length smaller than $I_R$ by $\Delta I_R$ from the time of the command to restart the recording, and thereafter the recording restarts. The tape in length of $I_R - \Delta I_R$ is already recorded, so that the previously recorded portion of the tape, when kept in the reproducing condition, is not erased and the reproduction control signal can be reproduced. Hence, a servo circuit is used to phase the above signal with the synchronisation signal of video signal to be recorded sequentially, so that the reproduction control signal, upon restarting the recording, coincides in the recording phase (recording track phase) with the previously recorded signal, thus causing no fluctuation in the picture at the boundary. In addition, the previously recorded portion overlaps with the later-recorded portion only by $\Delta I_R$, which is minimal and so scarcely affects the reproduced picture.

Thus, even in the method for the temporary stop during the recording and for the restart of recording, unless the tape is advanced a little after five minutes from the temporary stop, the above problem of tape damage will be created. During the recording, the reproducing mode is necessary for the tape in a slight advance, otherwise, the recorded portion is double during the tape movement only. Alternatively, the tape may be slightly advanced by the following method. Namely, the tape, when temporarily stopped during the recording, stops in condition of being moved reversely only by $I_R$ as above-mentioned, and after the lapse of time for five minutes, the tape now is normally fed (in the reproduction mode) by $I_R + \Delta I_R$ and again reversely moved to be kept in the temporary stop condition. Therefore, the tape advances normally by $\Delta I_R$ from its original position, so that the mechanical control circuit 26 advances the tape by $I_R + \Delta I_R$ every five minutes and carries out the reverse movement (by $I_R$) of the tape for the temporary stop for restarting the recording, which is enough to be programmed in the microcomputer.

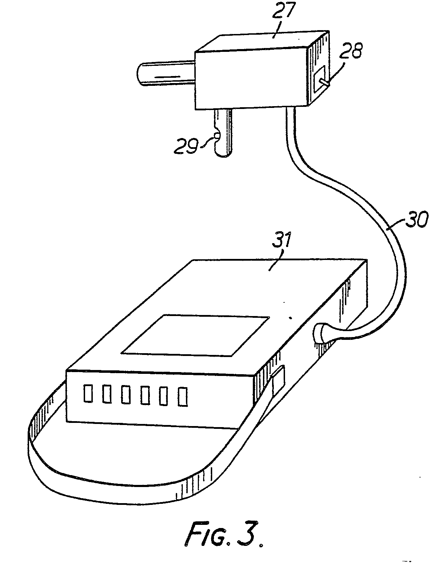

The invention, in either case of recording or reproducing, can prevent the magnetic layer of the tape from peeling-off caused by the temporary stop. However, in a case of leaving the tape in the temporary stop condition for a long time while the heads are rotating, the following drawback will occur, which is eliminated, as conventional, by bringing the heads to a halt of rotation while keeping the tape loaded. For example, a television camera 27 combined with a portable VTR as shown in Figure 3 has recently been widely used, the television camera 27 being connected to VTR 31 through a cable 30 to record on VTR 31 video signals of the object taken by camera 27, in which the aforesaid temporary stop (a switch 29 at the camera side gives the temporary stop order) often must be carried out. In this instance, the above method, when leaving the tape as the temporary stop for a long time, advances is little by little, whereby the head at last may reach the not-recorded portion of the tape. Thus, the recorded pictures of course are not continued even when restarting the recording. Furthermore, even during the temporary stop, a motor for rotating the rotary head drum of course consumes power and a current flows in other circuits, whereby the batteries are consumed to lead to a shutoff of the apparatus. Hence, for a temporary stop lasting a long time, rotary head drum 3 and other circuits are cut-off from the power source keeping the temporary stop (keeping tape 2 in Figure 1 attached to rotary head drum 3), so that the rotary drum 3 does not rotate to thereby avoid the aforesaid tape damage or head clogging. For this purpose, television camera 27 is provided with a switch 28, which is turned to "under the temporary stop", thereby cutting-off the motor driving the rotary head drum and other circuits from the power source, where the mechanical control circuit 26 should be kept energized. Hence, the tape is not shifted even when left for a long time and the batteries can conserve power (the camera of course is cut off) due to the fact that the mechanism unit is kept temporarily stopped and the tape need not move after the lapse of time for five minutes. Also, the microcomputer has to be so programmed that the mechanical control circuit may not work even after five minutes.

As seen from the above, this invention aims at the protection of the magnetic tape and rotary heads in VTR when the temporary stop is carried out during the recording or reproducing. Hence, this invention provides a video signal recording and reproducing apparatus which is different from the conventional one which brings VTR, when left temporarily stopped, to a halt after the lapse of a given time, and protects the magnetic tape and rotary magnetic heads from being damaged, even when the magnetic tape is kept attached to the rotary magnetic drum, thereby being of a considerably large industrial value.

**Claims**

1. A video signal recording and reproducing apparatus for a video tape recorder which loads a magnetic tape (2) on a rotary magnetic head drum (3) so as to record or reproduce video signals by magnetic heads (21, 22) said apparatus including a tape transportation means (12, 13, 14, 15, 18, 29) which during recording or reproducing temporarily stops transportation of said tape while keeping the rotary magnetic heads rotating and said tape in contact with said drum characterised in that the tape transportation means includes means (26) which allows said tape (2) to advance repetitively a little after each lapse of a time T from a position of the temporary stop, thereby to prevent the magnetic heads (21, 22) and the tape (2) from being damaged.

2. Apparatus according to claim 1, and comprising means (28) for stopping rotation of said rotary magnetic head drum while keeping the tape in contact with said drum and for stopping simultaneously said repetitive advancing.

3. Apparatus according to claim 2, wherein the rotation stopping means (28) is arranged to be operated after a plurality of operations of said means (26) of advancing the tape (2) a little.

**Patentansprüche**

1. Videosignalaufzeichnungs- und -wiedergabevorrichtung für einen Videobandrecorder, der ein Magnetband (2) auf eine rotierende Magnetkopftrommel (3) lädt, um durch Magnetköpfe (21, 22) Videosignale aufzunehmen oder wiederzugeben, die Vorrichtung enthaltend eine Bandtransporteinrichtung (12, 13, 14, 15, 18, 29) die während der Aufzeichnung oder Wiedergabe vorübergehend den Transport des genannten Bandes anhält, während die rotierenden Magnetköpfe weiterhin rotieren und das Band in Berührung mit der genannten Trommel bleibt, dadurch gekennzeichnet, daß die Bandtransporteinrichtung eine Einrichtung (26) enthält, die es dem Band (2) erlaubt nach jedem Ablauf einer Zeit T aus einer Position des vorübergehenden Halts sich ein Wenig fortzubewegen, um dadurch zu verhindern, daß die Magnetköpfe (21, 22) und das Band (2) beschädigt werden.

2. Vorrichtung nach Anspruch 1, und enthaltend eine Einrichtung (28) zum Anhalten der Drehung der rotierenden magnetischen Kopftrommel, während das Band in Berührung mit der Trommel gehalten wird, und zum gleichzeitigen Anhalten der wiederholten Fortbewegung.

3. Vorrichtung nach Anspruch 2, bei der die Anhalteeinrichtung (28) für die Drehbewegung so eingerichtet ist, daß sie nach einer Mehrzahl von Betätigungen der genannten Einrichtung (26) zum Fortbewegen des Bandes (2) um eine geringe Wegstrecke betätigt wird.

**Revendications**

1. Appareil d'enregistrement et de reproduction de signaux vidéo pour magnétoscope qui charge une bande magnétique (2) sur un tambour (3) de têtes magnétiques rotatives de façon à enregistrer ou reproduire des signaux vidéo au moyen de têtes magnétiques (21, 22), ledit appareil comportant un moyen de transport de band (12, 13, 14, 15, 18, 29) qui, pendant l'enregistrement ou la reproduction, arrête temporairement le transport de ladite bande tout en maintenant les têtes magnétiques rotatives en rotation et ladite bande en contact avec ledit tambour, caractérisé en ce que le moyen de transport de bande comport un moyen (26) qui permet que ladite bande (2) avance à répétition d'une petite distance à chaque fois qu'il s'est écoulé une durée T par rapport à la position de l'arrêt temporaire, ce qui a pour effet d'empêcher l'endommagement des têtes magnétiques (21, 22) et de la bande (2).

2. Appareil selon la revendication 1, comprenant un moyen (28) qui sert à arrêter la rotation dudit tambour de têtes magnétiques rotatives tout en maintenant la bande en contact avec ledit tambour et à arrêter simultanément ladite avance répétitive.

3. Appareil selon la revendication 2, où le moyen (28) d'arrêt de rotation est conçu pour être actonné après plusieurs opérations dudit moyen (26) permettant de faire un peu avancer la bande (2).

FIG. 1.

FIG. 2.

FIG. 3.